# FASCICULE DE BREVET EUROPEEN

(11) **EP 3 071 674 B1**
(45) Date de publication et mention de la délivrance du brevet: **27.12.2017**
(21) Numéro de dépôt: 14803087.7
(22) Date de dépôt: 21.11.2014
(51) Int. Cl.: C10J 3/50, B65G 53/26, B65G 53/24, B65G 53/12

(54) **DISPOSITIF DE TRANSFERT DE MATERIAU GRANULAIRE A CONSOMMATION D'ENERGIE REDUITE**
TRANSPORTGERÄT FÜR KÖRNIGES MATERIAL MIT EIN GERINGERER ENERGIEVERBRAUCH
TRANSFER DEVICE FOR GRANULAR MATERIAL AT REDUCED ENERGY CONSUMPTION

(30) Priorité: 21.11.2013 FR 1361466
(43) Date de publication de la demande: 28.09.2016
(73) Titulaire: Commissariat à l'Énergie Atomique et aux Énergies Alternatives, 75015 Paris (FR)
(72) Inventeur: GUYEZ PICARD, Estelle, F-38120 Saint Egreve (FR); GROS D'AILLON, Luc-François, F-38320 Brie et Angonnes (FR)
(74) Mandataire: Brevalex
(86) Numéro de dépôt international: PCT/EP2014/075240
(87) Numéro de publication internationale: WO 2015/075171

(56) Documents cités:
- EP-A1- 0 335 071
- EP-A1- 0 497 088
- WO-A1-2012/126939
- US-A- 4 877 423
- US-A1- 2011 100 274

## Description

### DOMAINE TECHNIQUE ET ART ANTÉRIEUR

La présente invention se rapporte aux dispositifs de transfert d'un matériau granulaire d'une zone à faible pression vers une zone à haute pression, le dispositif présentant une consommation en énergie réduite.

On précise ici que l'on comprend que, dans le contexte de l'invention, le terme « granulaire » désigne le fait que la matière solide à transférer est sous forme de particules ou grains, de granulométrie variable ou non et de dimensions submillimétriques, millimétriques ou centimétriques et qui peut être plus ou moins mélangée à un liquide.

L'application préférée visée est l'alimentation en biomasse d'un réacteur de gazéification.

Ce que l'on désigne sous l'appellation « biomasse », regroupe sous l'un de ses usages tout matériau inhomogène d'origine biologique, qui peut être quasi-sec, comme les résidus de scierie ou la paille, ou imbibé d'eau comme les déchets ménagers. De granulométrie variable, son transport s'avère problématique. Or, au vu de la valorisation de la biomasse qui est de plus en plus d'actualité, voire imposée, telle que par exemple par conversion thermochimique, le transport de cette matière solide se généralise et doit répondre à des critères exigeants, comme l'absence de pertes de matière, et ce dans des conditions de coût optimales. Les particules solides de la biomasse sont des poudres ou des copeaux, par exemple des particules cellulosiques, telles des fins copeaux de végétaux, comme du bois. De nombreux systèmes de transport ou convoyage en solide existent, y compris concernant la biomasse : les convoyeurs, typiquement des systèmes de vis sans fin, les systèmes à transfert pneumatique ou des systèmes à écluse rotative. Mais tous ces systèmes ont été développés pour fonctionner à des pressions au voisinage de la pression atmosphérique, autrement dit pour de faibles écarts de pression entre zones en amont et en aval du convoyage ou transfert. EP 0 497 088 A1 décrit un dispositif de transfert de matière granulaire entre une première zone à une première pression et une deuxième zone à une deuxième pression la deuxième pression étant supérieure à la première pression, ledit dispositif comportant un premier sas comprenant une connexion d'alimentation en matière granulaire destinée à être connectée à la première zone, une connexion d'évacuation de la matière granulaire destinée à être connectée à la deuxième zone.

Lors du processus de valorisation, la biomasse de nature et de granulométrie différentes qui est stockée habituellement à la pression atmosphérique, alimente de manière continue un réacteur chimique (réacteur de gazéification), de type réacteur à lit fluidisé ou un réacteur à flux entraîné fonctionnant sous pression.

A ce jour, il n'existe guère qu'un type de dispositif dénommé en anglais « Lock hopper », conçu pour fonctionner dans ces conditions de transfert entre une chambre en amont sous pression atmosphérique et une chambre en aval sous pression élevée. Un dispositif « Lock hopper » utilise une ou plusieurs chambres de transfert intermédiaires pressurisées, à l'azote par exemple.

Plus précisément, le fonctionnement d'un tel dispositif « Lock hopper » peut être décrit de la manière suivante. On utilise une chambre de transfert, comprenant une vanne en amont, pour l'introduction d'un volume de particules solides, et une vanne en aval, pour le refoulement des particules solides dans la chambre d'alimentation de l'équipement considéré (réacteur chimique). Le fonctionnement est cyclique, chaque cycle se résumant aux étapes suivantes :
- introduction d'un volume de particules solides dans la chambre de transfert, le plus souvent par gravité, par ouverture de la vanne en amont, la vanne en aval étant maintenue fermée ;
- fermeture de la vanne en amont, la vanne en aval étant maintenue fermée ;
- mise en pression du volume défini par la chambre de transfert, jusqu'à ce que la pression dans celle-ci atteigne la pression dans la chambre d'alimentation du réacteur chimique ;
- ouverture de la vanne en aval, ce qui permet le transfert des particules solides dans la chambre d'alimentation, en général par écoulement par gravité ;
- fermeture de la vanne en aval, la vanne en amont étant maintenue fermée, et évacuation du surplus de pression présent dans la chambre de transfert.

Le fluide de compression est généralement du gaz.

Le fonctionnement de ce type de dispositif de transfert est celui en gaz perdu, i.e. le gaz de compression est évacué à l'atmosphère après vidange de la matière granulaire, le gaz transfert étant généralement de l'air atmosphérique comprimé sur place ou dans des réservoirs commerciaux.

### EXPOSÉ DE L'INVENTION

C'est par conséquent un but de la présente invention d'offrir un dispositif de transfert d'un milieu granulaire offrant une consommation en gaz de pressurisation réduite et une consommation d'énergie réduite.

Le but précédemment énoncé est atteint par un dispositif de transfert comportant au moins un sas et un réservoir de gaz sous pression interconnectés pneumatiquement, le sas est destiné à être alimenté en matière granulaire et à transférer sous pression le matériau dans une zone à plus haute pression, la mise sous pression est réalisée au moyen d'un gaz de transfert, ce gaz provenant du réservoir. Le gaz de transfert circule du sas au réservoir en phase de remplissage du sas et du réservoir au sas en phase de mise sous pression et de vidange du sas. Ainsi, en fin de phase de transfert, le gaz n'est pas rejeté mais renvoyé vers le réservoir, il est ainsi recyclé. Ainsi la quantité de gaz utilisée est notablement réduite et d'autre part l'énergie requise pour comprimer le gaz est réduite, puisque l'on récupère une partie de l'énergie du gaz de transfert du cycle précédent.

Dans un mode de réalisation avantageux, le réservoir est formé par sas. Avantageusement, lors du fonctionnement, à chaque cycle de transfert un sas différent est rempli de matière granulaire

Dans un autre mode de réalisation, le réservoir est formé directement par la zone à pression plus élevée qui est alimentée en matière granulaire, par exemple un réacteur de gazéification. En effet son volume étant très grand par rapport à celui des sas, le fait de prélever du gaz sous pression dans celui-ci est transparent pour son fonctionnement.

La présente invention a alors pour objet un dispositif de transfert de matière granulaire entre une première zone à une première pression et une deuxième zone à une deuxième pression, la deuxième pression étant supérieure à la première pression, ledit dispositif comportant au moins un premier sas comprenant une connexion d'alimentation en matière granulaire destinée à être connectée à la première zone, un réservoir de gaz de transfert, une connexion d'évacuation de la matière granulaire destinée à être connectée à la deuxième zone, une connexion pneumatique au réservoir de gaz de transfert sous pression par l'intermédiaire d'un circuit d'interconnexion comprenant des moyens de compression de gaz de transfert, et des moyens de commande, lesdits moyens de commande étant tels que :
- lorsque la connexion d'alimentation est ouverte, la connexion d'évacuation est fermée, et le premier sas est en communication pneumatique avec le réservoir de gaz de transfert, le gaz de transfert étant comprimé par les moyens de compression de gaz de transfert avant d'être envoyé dans le réservoir,
- lorsque le remplissage en matériau granulaire du premier sas est terminé, une connexion pneumatique entre le premier sas et le réservoir est établie afin d'équilibrer la pression de gaz de transfert du premier sas et celle du réservoir,
- lorsque la connexion d'évacuation est ouverte, la connexion d'alimentation est fermée, et le matériau granulaire est évacué vers la deuxième zone, le premier sas est alimenté en gaz de transfert par le réservoir de gaz de transfert, ledit gaz de transfert étant comprimé de telle façon que le premier sas est alimenté en gaz de transfert à une pression proche de ou égale à la deuxième pression.

Dans un mode de réalisation, le réservoir est formé par la deuxième zone, le gaz de transfert étant celui de la deuxième zone.

Dans un autre mode de réalisation, le gaz de transfert est différent de celui de la deuxième zone, le réservoir étant distinct de la deuxième zone. Le réservoir peut alors être formé par un deuxième sas, comprenant une connexion d'alimentation et une connexion d'évacuation, ledit deuxième sas étant apte à être rempli de matériau granulaire, le premier sas formant alors le réservoir de gaz.

La présente invention a également pour objet un système de transfert peut comporter deux dispositifs de transfert selon l'invention, lesdits dispositifs étant actionnés de sorte à assurer une alimentation sensiblement continue de la deuxième zone.

La présente invention a également pour objet une installation d'utilisation de matériau granulaire comportant au moins une réserve de matériau granulaire à la première pression, au moins un dispositif de transfert selon l'invention ou un système de transfert selon l'invention, ladite réserve étant connectée à la connexion d'alimentation, et au moins un réacteur formant la deuxième zone.

La présente invention a également pour objet un procédé de transfert d'un matériau granulaire entre une première zone à une première pression et une deuxième zone à une deuxième pression, la deuxième pression étant supérieure à la première pression, au moyen d'au moins un sas apte à recevoir le matériau granulaire et un réservoir apte à stocker un gaz de transfert sous pression, ledit procédé comportant les étapes:
- alimentation du premier sas en matière granulaire et transfert vers le réservoir du gaz de transfert contenu dans le premier sas, ledit gaz de transfert étant compressé,
- équilibrage des pressions de gaz de transfert entre le premier sas et le réservoir,
- évacuation du matériau granulaire vers la deuxième zone, le premier sas étant alimenté en gaz de transfert sous pression par le premier réservoir.

Dans un mode de réalisation, le réservoir est la deuxième zone, après évacuation du matériau granulaire la pression du gaz de transfert dans le premier sas peut être ramenée à la première pression.

Dans un autre mode de réalisation, le réservoir est formé par un deuxième sas, après évacuation du matériau granulaire, la pression du gaz de transfert dans le premier sas est à la première pression et la pression du gaz de transfert dans le deuxième sas est à la première pression, ledit procédé comportant alors les étapes
- alimentation du deuxième sas en matière granulaire et transfert vers le premier sas du gaz de transfert contenu dans le premier sas, ledit gaz de transfert étant compressé,
- équilibrage des pressions de gaz de transfert entre le deuxième sas et le premier sas
- évacuation du matériau granulaire vers la deuxième zone, le deuxième sas étant alimenté en gaz de transfert sous pression par le premier sas.

Le procédé de transfert peut mettre en oeuvre un troisième sas et un deuxième réservoir, l'ensemble formé par le premier sas et le premier réservoir et l'ensemble formé par le troisième sas et le deuxième réservoir étant activés de sorte à assurer un transfert continu de la première zone vers la deuxième zone.

### BRÈVE DESCRIPTION DES DESSINS

La présente invention sera mieux comprise à l'aide de la description qui va suivre et des dessins en annexes sur lesquels :
- la figure 1 est une représentation schématique d'un exemple de réalisation d'un dispositif de transfert selon un premier mode de réalisation de l'invention,
- les figures 2A à 2D sont des représentations des différentes étapes de fonctionnement du dispositif de la figure 1 lors du transfert d'une matière granulaire.
- la figure 3 est une réalisation schématique d'un autre exemple de réalisation d'un dispositif de transfert selon le premier mode de réalisation,
- les figures 4A à 4D sont des représentations schématiques de fonctionnement d'un autre exemple de réalisation d'un dispositif de transfert selon un deuxième mode de réalisation de l'invention utilisant la zone à alimenter comme source de gaz sous pression.

### EXPOSÉ DÉTAILLÉ DE MODES DE RÉALISATION PARTICULIERS

Dans la description qui va suivre, les termes "matériau granulaire", "matière granulaire", "matériau pulvérulent" et "matière pulvérulent" sont considérés comme synonymes.

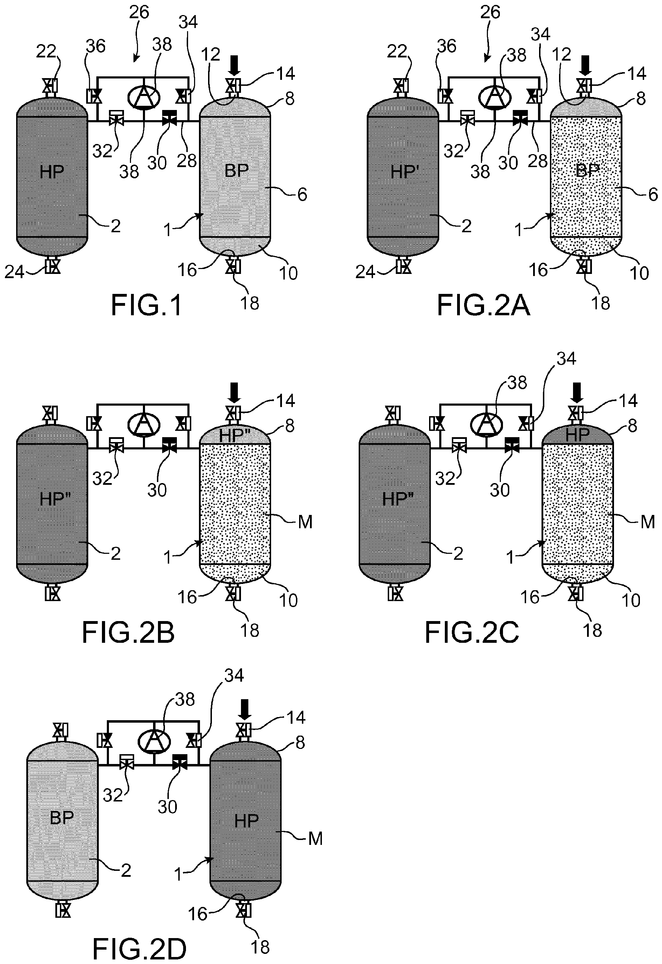

Sur la figure 1, on peut voir un exemple de réalisation d'un dispositif de transfert de matière granulaire d'un premier mode de réalisation représenté schématiquement comportant quatre sas, un premier sas 1 et un deuxième sas 2.

Les deux sas sont de construction similaire, seul le premier sas 1 sera décrit en détail. Le premier sas 1 comporte une virole 6 obturée à chacune de ses extrémités longitudinales par un fond supérieur 8 et un fond inférieur 10.

Les sas sont tels qu'ils sont aptes à tenir des hautes pressions, par exemple de l'ordre de 40 Bar.

Dans l'exemple représenté, le fond supérieur est en forme d'hémisphère et le fond inférieur est en forme d'hémisphère, une forme tronconique est envisageable.

Le fond supérieur comporte un orifice d'alimentation 12 obturé par une vanne d'alimentation 14 en matière granulaire. La vanne d'alimentation 14 est apte à connecter l'intérieur du premier sas à une zone basse pression (non représentée), généralement à pression atmosphérique, par exemple un réservoir de matière granulaire. Une vis sans fin (non représentée) est par exemple disposée au dessus de la vanne d'alimentation 14 et transfert la matière granulaire du réservoir à l'entrée de la vanne d'alimentation 14.

La haute pression est désignée HP, elle est également désignée par "pression de refoulement" et la basse pression est désignée BP.

Le fond inférieur 10 comporte un orifice d'évacuation 16 obturée par une vanne d'évacuation 18 apte à connecter l'intérieur du premier sas vers une zone haute pression (non représentée). La haute pression est par exemple de l'ordre de 30 Bar à 40 Bar dans le cas d'un réacteur de gazéification. Une vis sans fin est par exemple prévue entre la vanne d'évacuation 18 et l'entrée de la zone haute pression. Les deux vannes d'évacuation 18 et 24 sont connectées à l'entrée de la zone haute pression. La zone haute pression est également désignée "zone en aval". Avantageusement, les deux vannes d'évacuation déversent la matière granulaire dans un collecteur commun en entrée de la zone en aval.

Le deuxième sas 2 est de construction similaire et est apte à être connecté à une zone basse pression par une vanne 22, qui peut être celle qui alimente le premier sas 1 ou une autre zone basse pression. Le deuxième sas 2 est apte à être connectée à une zone haute pression par une vanne 24, qui peut être la zone en aval 20 que le premier sas 1 alimente.

Les premier 1 et deuxième 2 sas sont interconnectés par un circuit d'interconnexion 26 permettant un transfert de gaz de transfert d'un sas à l'autre.

Le circuit d'interconnexion 26 comporte une pluralité de vannes pneumatiques pour autoriser ou interdire la circulation du gaz de transfert d'un sas à l'autre.

Plus particulièrement, dans l'exemple représente, le circuit d'interconnexion comporte quatre vannes pneumatiques 30, 32, 34, 36 et un compresseur 38.

Le circuit d'interconnexion comporte un conduit 28 reliant le premier sas 1 et le deuxième sas 2. La vanne 30 est située du côté du premier sas et la vanne 32 est du côté du deuxième sas. Les vannes pneumatiques 30 et 34, et le compresseur 38 sont connectés en série et les vannes pneumatiques 32 et 36 et le compresseur 38 sont connectés également en série. Ainsi le circuit d'interconnexion peut faire circuler le gaz de transfert d'un sas à l'autre soit sans traverser le compresseur soit en traversant le compresseur pour en augmenter la pression.

De manière préférée, le circuit d'interconnexion 26 comporte des filtres pour limiter le transfert de matière granulaire d'un sas à l'autre.

Le gaz de transfert est un gaz compatible avec la zone haute pression, qui est par exemple le réacteur de gazéification. En effet, il ne peut être évité que du gaz de transfert soit entraîné dans la zone haute pression du fait de la porosité de la matière granulaire. De manière avantageuse, le gaz de transfert est celui mis en oeuvre dans la zone haute pression, ce qui, aux pertes près, permet un recyclage continu du gaz.

Les vannes et le compresseur du circuit d'interconnexion 26 ainsi que les vannes d'alimentation et d'évacuation des sas sont commandés par des moyens de commande, par exemple formés par un ordinateur pour gérer les différentes étapes de remplissage, compression et vidange.

Le fonctionnement du dispositif de transfert selon l'invention va maintenant être décrit.

Initialement (figure 1), les vannes d'alimentation 14, 22 et d'évacuation 18, 24 sont fermées, l'un des sas est rempli de gaz de transfert à haute pression HP et l'autre sas est rempli de gaz de transfert à basse pression BP. Dans l'exemple représenté, le premier sas 1 est à basse pression BP et le deuxième sas2 est à haute pression HP.

Lors d'une première phase représentée sur la figure 2A, la vanne d'alimentation 14 du premier sas est ouverte de sorte que le premier sas 1 est alimenté en matière granulaire M qui est stockée à basse pression dans un réservoir. Avantageusement, le remplissage du premier sas se fait par gravité. Lors de cette étape, les vannes 30 et 36 sont ouvertes et les vannes 32 et 34 sont fermées. Le gaz contenu dans le premier sas est évacué vers le deuxième sas du fait de remplissage du volume intérieur du premier sas par la matière granulaire. Le compresseur fonctionne de sorte à amener le gaz de transfert du sas 1 à la pression HP. La pression du gaz de transfert dans le deuxième sas 2 augmente, et devient égale à HP' qui est supérieure à la haute pression HP.

Sur la figure 2B, le remplissage du premier sas en matière granulaire est terminé. La pression dans le deuxième sas est HP' et la pression du gaz de transfert entre les grains et dans la partie supérieure restée vide du premier sas est BP.

Lors d'une deuxième phase, la vanne 36 est fermée et la vanne 32 est ouverte, la vanne 30 reste ouverte, le compresseur est isolé. Ainsi il y a un équilibrage des pressions de gaz de transfert entre les deus sas, la pression du gaz de transfert dans le premier sas augmente à une pression HP" qui est intermédiaire entre BP et HP', la matière granulaire est alors comprimée par rapport à l'étape de remplissage.

Lors d'une étape suivante, la vanne 30 est fermée, la vanne 34 est ouverte et la vanne 32 reste ouverte, le compresseur 38 est mis en route. Le gaz de transfert dans la partie supérieure du premier sas est comprimé pour atteindre HP qui est la pression de refoulement et qui correspond à la pression du système aval à alimenter (figure 2C).

Lors d'une phase suivante, la vanne d'évacuation 18 est ouverte pour évacuer la matière granulaire sous la pression HP vers la zone d'évacuation. Lors de la vidange du premier sas, celui-ci est alimenté en gaz de transfert à pression HP par le deuxième sas via le compresseur afin d'éviter que le gaz contenu dans la zone haute pression ne remonte dans le premier sas.

Lorsque le premier sas est complètement vidangé, du gaz de transfert à la pression HP remplit le premier sas et du gaz de transfert à la pression BP remplit le deuxième sas (figure 2D).

Le deuxième sas est alors prêt à être rempli en matière granulaire en vue de l'alimentation de la zone haute pression. Les étapes décrites ci-dessus sont répétées.

Il pourrait être envisagé, par exemple si l'on ne souhaite faire transiter la matière uniquement par le premier sas, à la fin de la vidange du premier sas de transférer le gaz de transfert du premier sas au deuxième sas pour remettre le système dans l'état de la figure 2A.

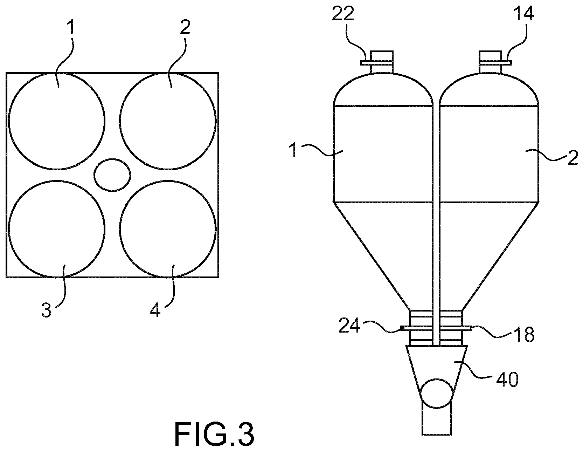

Sur la figure 3, on peut voir vu de dessus et de côté d'un autre exemple de réalisation d'un dispositif selon l'invention selon le premier mode de réalisation, comportant un premier sas 1, un deuxième sas 2, une troisième sas 3 et un quatrième sas 4 de construction similaire aux premier et deuxième sas décrits ci-dessus.

Comme pour l'exemple de la figure 1, les premier 1 et deuxième 2 sas sont interconnectés permettant un transfert de gaz d'un sas à l'autre.

Les troisième 3 et quatrième 4 sas sont également interconnectés par un circuit d'interconnexion 26 permettant un transfert de gaz d'un sas à l'autre.

Avantageusement, les vannes d'évacuation des quatre sas débitent dans un collecteur 40 à sortie unique connecté à l'entrée de la zone haute pression. En variante, on pourrait imaginer que chaque d'évacuation soit connecté à l'entrée de la zone haute pression.

Le fonctionnement de chaque paire 1, 2, et 3, 4 de sas est similaire à celui décrit en relation avec les figures 2A à 2D. En faisant fonctionner successivement les deux paires de sas, les vannes d'évacuation assurent un écoulement tour à tour dans la zone haute pression. Il est donc possible d'avoir un transfert continu de matière granulaire vers la zone haute pression.

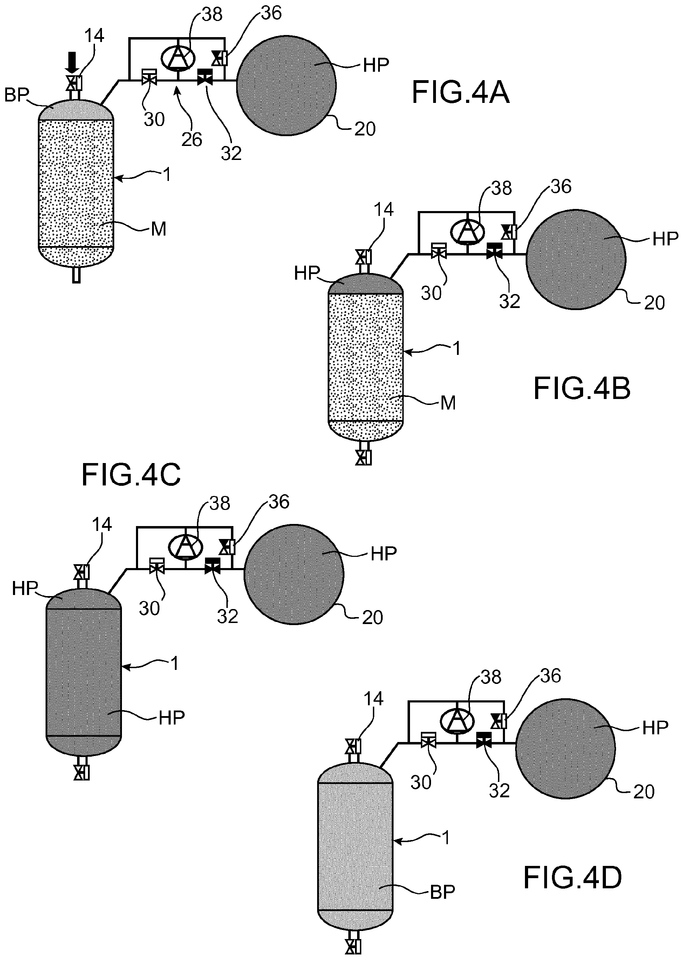

Un autre exemple de réalisation selon un deuxième mode de réalisation va maintenant être décrit en relation avec les figures 4A à 4D. Dans ce mode de réalisation, le gaz utilisé pour le transfert est le même que celui mis en oeuvre dans la zone haute pression.

Le dispositif comporte un sas connecté à la zone en aval 20 par un circuit d'interconnexion similaire à celui de l'exemple des figures 2A et 2B, les mêmes références seront utilisées.

La zone en aval joue le rôle du deuxième sas, le prélèvement de gaz dans la zone en aval n'a pas d'influence sur son fonctionnement puisqu'elle peut être considérée comme un réservoir à pression constante de capacité infinie. Le gaz extrait de la zone en aval permet de pressuriser le sas par détente isenthalpique irréversible, puis de transférer la matière pulvérulente à pression constante, le gaz étant ensuite réinjecté dans la zone en aval. Le gaz de la zone en aval est désigné "gaz process".

Les vannes et le compresseur du circuit d'interconnexion 26 ainsi que les vannes d'alimentation et d'évacuation des sas sont commandés par des moyens de commande, par exemple formés par un ordinateur pour gérer les différentes étapes de remplissage, compression et vidange.

Le fonctionnement de ce dispositif va maintenant être décrit.

Initialement, les vannes d'alimentation 14 et d'évacuation 18 sont fermées, le sas est rempli de gaz à basse pression BP. Le sas n'est pas en communication pneumatique avec la zone en aval.

Lors d'une première phase représentée sur la figure 4A, la vanne d'alimentation 14 du premier sas est ouverte de sorte que le sas 1 est alimenté en matière granulaire qui est stockée à basse pression dans un réservoir. Avantageusement, le remplissage du premier sas 1 se fait par gravité. Lors de cette étape, les vannes 30 et 36 sont ouvertes et la vanne 32 est fermée. Le gaz contenu dans le premier sas est évacué vers la zone en aval du fait de remplissage du volume intérieur du premier sas par la matière granulaire. Le compresseur fonctionne de sorte à amener le gaz du sas 1 à la pression HP.

Sur la figure 4A, le remplissage du sas 2 en matière granulaire est terminé.

Lors d'une deuxième phase (figure 4B), la vanne 36 est fermée et la vanne 32 est ouverte, la vanne 30 reste ouverte, le compresseur est isolé. Ainsi il y a un équilibrage de la pression dans le sas 1 avec celle de la zone en aval. La pression de gaz dans le sas 1 atteint la pression HP, celle de la zone en aval 20 ne varie quasiment pas.

Lors d'une phase suivante (figure 4C), la vanne d'évacuation 18 est ouverte pour évacuer la matière granulaire sous la pression HP vers la zone en aval 20. Lors de la vidange du premier sas, les vannes 30 et 32 restent ouvertes de sorte à alimenter en gaz à pression HP.

Lorsque le premier sas est complètement vidangé, la vanne 32 est fermée, la vanne 30 reste ouverte et la vanne 36 est ouverte. Le gaz contenu dans le sas 1 est renvoyé vers la zone en aval via le compresseur, pour cela le gaz doit être comprimé à la pression de la zone en aval. La pression dans le sas 1 est alors à la pression BP et est prête à être à nouveau rempli en matériau granulaire (figure 4D).

Lors de la deuxième phase de compression, il se peut que la pression du gaz soit légèrement relevée pour compenser les diverses pertes de charge.

A titre d'exemple uniquement, nous allons donner de caractéristiques dimensionnelles d'un dispositif de transfert à quatre sas tel que représenté sur le figure 3.

Chaque sas a un volume d'environ 7,5 m³. Les conduits d'amener et de vidange ont un diamètre de 100 mm de même que le passage des vannes, par ailleurs, les quatre sas débitent, tour à tour, dans la zone en aval.

La puissance maximale utile de l'unité de compression correspond à un débit volumique de 5 m³/h sous 30 Bar avec un taux de compression de 30, soit une puissance théorique minimale de 16 kW pour une compression réversible isotherme.

A titre de comparaison, nous allons donnée des valeurs de l'énergie consommée dans le cas d'un fonctionnement à gaz perdu, dans le cas d'un fonctionnement en recyclage de gaz de transfert et dans le cas d'un recyclage du gaz process selon l'invention.

En fonctionnement à gaz perdu, l'énergie consommée correspond à la pressurisation du sas chargé en matière pulvérulente et au transfert de cette dernière, donc à la compression du gaz de la pression d'admission à celle de refoulement pour remplir intégralement le volume du sas à la pression de refoulement.

L'énergie consommée est par exemple: W = 28 kWh/t.

Dans le cas d'un fonctionnement avec recyclage du gaz de transfert, la phase d'équilibrage bien qu'irréversible ne consomme pas d'énergie externe, et, considérant les autres transformations comme isothermes et réversibles, le bilan d'énergie à fournir par cycle correspond à la compression de la pression d'admission à la pression de compression du gaz chassé par le matériau granulaire du sas 1 vers le sas 2, de la compression du gaz du sas 2 de la pression de refoulement à celle de compression, de la compression d'une partie du gaz du sas 2, et de la compression du gaz du sas 1, de la pression d'équilibre à celle de refoulement, de la détente du gaz résiduel du sas 2 de la pression d'équilibre à celle d'admission, augmenté du transfert de la poudre hors du sas 1.

L'énergie consommée est par exemple: W = 7 kWh/t.

Dans le cas d'un fonctionnement avec recyclage du gaz process de la zone en aval, l'énergie consommée est par exemple: W = 13 kWh/t.

L'énergie consommée en fonctionnement en gaz process est supérieure à celle consommée en fonctionnement avec recyclage du gaz du gaz de transfert, car à la fin du transfert de matière, le gaz process doit est comprimé de la pression BP à la pression HP pour être envoyé dans la zone en aval et permettre un nouveau remplissage avec le matériau granulaire.

Grâce à l'invention, le gaz de transfert n'est pas perdu et est recyclé à chaque cycle de transfert de matière granulaire.

Les pertes en gaz de transfert dues notamment au transfert vers la zone haute pression sont compensées lors des différents cycles, cependant les volumes de gaz sont très faibles par rapport à ceux mis en oeuvre dans le cas d'un fonctionnement à gaz perdu.

Dans le cas où le gaz de transfert est celui de la zone haute pression, le complément de gaz dans les sas est assuré directement par un prélèvement dans la zone haute pression, il n'ya donc que très peu de perte.

En outre, dans le cas où la matière granulaire et/ou le gaz présenterait des risques pour l'environnement extérieur, ces risques sont considérablement réduits car aucun gaz n'est évacué des sas au cours du fonctionnement du dispositif de transfert selon l'invention.

## Revendications

1. Dispositif de transfert de matière granulaire entre une première zone à une première pression (BP) et une deuxième zone à une deuxième pression (HP), la deuxième pression (HP) étant supérieure à la première pression (BP), ledit dispositif comportant au moins un premier sas (1) comprenant une connexion d'alimentation (14) en matière granulaire destinée à être connectée à la première zone, un réservoir de gaz de transfert (2), une connexion d'évacuation (18) de la matière granulaire destinée à être connectée à la deuxième zone, une connexion pneumatique au réservoir de gaz de transfert sous pression par l'intermédiaire d'un circuit d'interconnexion (26) comprenant des moyens de compression (38) de gaz de transfert, et des moyens de commande, lesdits moyens de commande étant tels que:
- lorsque la connexion d'alimentation (14) est ouverte, la connexion d'évacuation (18) est fermée, et le premier sas (1) est en communication pneumatique avec le réservoir de gaz de transfert, le gaz de transfert étant comprimé par les moyens de compression (38) de gaz de transfert avant d'être envoyé dans le réservoir,
- lorsque le remplissage en matériau granulaire du premier sas (1) est terminé, une connexion pneumatique entre le premier sas (1) et le réservoir (2) est établie afin d'équilibrer la pression de gaz de transfert du premier sas (1) et celle du réservoir (2)
- lorsque la connexion d'évacuation (18) est ouverte, la connexion d'alimentation (14) est fermée, et le matériau granulaire est évacué vers la deuxième zone, le premier sas (1) est alimenté en gaz de transfert par le réservoir de gaz de transfert (2), ledit gaz de transfert étant comprimé de telle façon que le premier sas (1) est alimenté en gaz de transfert à une pression proche de ou égale à la deuxième pression (HP).

2. Dispositif de transfert selon la revendication 1, dans lequel le réservoir est formé par la deuxième zone, le gaz de transfert étant celui de la deuxième zone.

3. Dispositif de transfert selon la revendication 1, dans lequel le gaz de transfert est différent de celui de la deuxième zone, le réservoir étant distinct de la deuxième zone.

4. Dispositif de transfert selon la revendication 3, dans lequel le réservoir est formé par un deuxième sas, comprenant une connexion d'alimentation (22) et une connexion d'évacuation (24), ledit deuxième sas étant apte à être rempli de matériau granulaire, le premier sas (1) formant alors le réservoir de gaz.

5. Système de transfert comportant deux dispositifs de transfert selon l'une des revendications 1 à 4, lesdits dispositifs étant actionnés de sorte à assurer une alimentation sensiblement continue de la deuxième zone.

6. Installation d'utilisation de matériau granulaire comportant au moins une réserve de matériau granulaire à la première pression, au moins un dispositif de transfert selon l'une des revendications 1 à 4 ou un système de transfert selon la revendication 5, ladite réserve étant connectée à la connexion d'alimentation, et au moins un réacteur formant la deuxième zone.

7. Procédé de transfert d'un matériau granulaire entre une première zone à une première pression et une deuxième zone à une deuxième pression, la deuxième pression étant supérieure à la première pression, au moyen d'au moins un sas apte à recevoir le matériau granulaire et un réservoir apte à stocker un gaz de transfert sous pression, ledit procédé comportant les étapes:
- alimentation du premier sas en matière granulaire et transfert vers le réservoir du gaz de transfert contenu dans le premier sas, ledit gaz de transfert étant compressé,
- équilibrage des pressions de gaz de transfert entre le premier sas et le réservoir,
- évacuation du matériau granulaire vers la deuxième zone, le premier sas étant alimenté en gaz de transfert sous pression par le premier réservoir.

8. Procédé de transfert selon la revendication 7, dans lequel le réservoir est la deuxième zone, après évacuation du matériau granulaire la pression du gaz de transfert dans le premier sas est ramenée à la première pression.

9. Procédé de transfert selon la revendication 7, dans lequel le réservoir est formé par un deuxième sas, après évacuation du matériau granulaire, la pression du gaz de transfert dans le premier sas est à la première pression et la pression du gaz de transfert dans le deuxième sas est à la première pression, ledit procédé comportant alors les étapes
- alimentation du deuxième sas en matière granulaire et transfert vers le premier sas du gaz de transfert contenu dans le premier sas, ledit gaz de transfert étant compressé,
- équilibrage des pressions de gaz de transfert entre le deuxième sas et le premier sas
- évacuation du matériau granulaire vers la deuxième zone, le deuxième sas étant alimenté en gaz de transfert sous pression par le premier sas.

10. Procédé de transfert selon l'une des revendications 7, 8 ou 9, mettant en oeuvre un troisième sas et un deuxième réservoir, l'ensemble formé par le premier sas et le premier réservoir et l'ensemble formé par le troisième sas et le deuxième réservoir étant activés de sorte à assurer un transfert continu de la première zone vers la deuxième zone.

## Patentansprüche

1. Vorrichtung zum Fördern von körnigem Material zwischen einem ersten Bereich mit einem ersten Druck (BP), und einem zweiten Bereich mit einem zweiten Druck (HP) wobei der zweite Druck (HP) höher ist als der erste Druck (BP), wobei die Vorrichtung zumindest einen ersten Schleusbehälter (1) umfasst, wobei der zumindest eine Schleusbehälter (1) umfassend:
eine Zufuhrverbindung (14) für körniges Material, die zum Verbinden mit dem ersten Bereich vorgesehen ist,
einen Fördergasbehälter (2),
eine Entleerungsverbindung (18) für körniges Material, die zum Verbinden mit dem zweiten Bereich vorgesehen ist,
eine pneumatische Verbindung mit dem Fördergasbehälter, die über einen Verbindungskreis (26), der Fördergas-Verdichtungsmittel (38) und Steuermittel umfasst, unter Druck steht, wobei die Steuermittel derart ausgestaltet sind, dass:
wenn die Zufuhrverbindung (14) geöffnet ist, die Entleerungsverbindung (18) geschlossen ist, und der erste Schleusbehälter (1) in pneumatischer Verbindung mit dem Fördergasbehälter steht, wobei das Fördergas durch die Fördergas-Verdichtungsmittel (38) verdichtet wird, bevor es in den Behälter eingeleitet wird,
wenn das Auffüllen des ersten Schleusbehälters (1) mit körnigem Material abgeschlossen ist, eine pneumatische Verbindung zwischen dem ersten Schleusbehälter (1) und dem Behälter (2) hergestellt wird, um den Fördergasdruck des ersten Schleusbehälters (1) und des Behälters (2) auszugleichen
wenn die Entleerungsverbindung (18) geöffnet ist, die Zufuhrverbindung (14) geschlossen ist, und das körnige Material zu dem zweiten Bereich abgeführt wird, dem ersten Schleusbehälter (1) durch den Fördergasbehälter (2) Fördergas zugeführt wird, wobei das Fördergas so verdichtet ist, dass dem ersten Schleusbehälter (1) Fördergas mit einem Druck nahe dem oder gleich dem zweiten Druck (HP) zugeführt wird.

2. Fördervorrichtung nach Anspruch 1, wobei der Behälter durch den zweiten Bereich gebildet wird, wobei das Fördergas das des zweiten Bereichs ist.

3. Fördervorrichtung nach Anspruch 1, wobei das Fördergas von dem des zweiten Bereichs verschieden ist, wobei der Behälter von dem zweiten Bereich getrennt ist.

4. Fördervorrichtung nach Anspruch 3, wobei der Behälter durch einen zweiten Schleusbehälter gebildet ist, der eine Zufuhrverbindung (22) und eine Entleerungsverbindung (24) umfasst, und wobei der zweite Schleusbehälter mit körnigem Material gefüllt sein kann, und der erste Schleusbehälter (1) dann den Gasbehälter bildet.

5. Fördersystem, umfassend zwei Fördervorrichtungen nach einem der Ansprüche 1 bis 4, wobei die Vorrichtungen so betrieben werden, dass sie eine im Wesentlichen kontinuierliche Zufuhr zu dem zweiten Bereich gewährleisten.

6. Anlage zur Nutzung von körnigem Material, umfassend zumindest eine Speichereinrichtung für körniges Material unter dem ersten Druck, zumindest eine Fördervorrichtung nach einem der Ansprüche 1 bis 4, oder ein Fördersystem nach Anspruch 5, wobei die Speichereinrichtung mit der Zufuhrverbindung verbunden ist, und zumindest ein Reaktor den zweiten Bereich bildet.

7. Verfahren zum Fördern eines körnigen Materials zwischen einem ersten Bereich mit einem ersten Druck, und einem zweiten Bereich mit einem zweiten Druck unter Verwendung von zumindest einem Schleusbehälter, der geeignet ist, das körnige Material aufzunehmen, und einem Behälter, der geeignet ist, ein unter Druck stehendes Fördergas zu speichern, wobei der zweite Druck höher ist als der erste Druck, wobei das Verfahren die folgenden Schritte umfasst:
Zufuhr von körnigem Material zu dem ersten Schleusbehälter und Fördern des Fördergases zu dem in dem ersten Schleusbehälter enthaltenen Fördergasbehälter, das Fördergas verdichtet wird,
Ausgleich der Fördergasdrücke zwischen dem ersten Schleusbehälter und dem Behälter,
Entleeren des körnigen Materials zu dem zweiten Bereich, wobei dem ersten Schleusbehälter durch den ersten Behälter unter Druck stehendes Fördergas zugeführt wird.

8. Förderverfahren nach Anspruch 7, wobei der Behälter der zweite Bereich ist, wobei nach dem Entleeren des körnigen Materials der Druck des Fördergases in dem ersten Schleusbehälter auf den ersten Druck reduziert wird.

9. Förderverfahren nach Anspruch 7, wobei
der Behälter durch einen zweiten Schleusbehälter gebildet ist,
nach dem Entleeren des körnigen Materials der Druck des Fördergases in dem ersten Schleusbehälter bei dem ersten Druck liegt, und
der Druck des Fördergases in dem zweiten Schleusbehälter bei dem ersten Druck liegt, wobei das Verfahren dann die folgenden Schritte umfasst:
Zufuhr von körnigem Material zu dem zweiten Schleusbehälter und Fördern des in dem ersten Schleusbehälter enthaltenen Fördergases zu dem ersten Schleusbehälter, wobei das Fördergas verdichtet wird,
Ausgleich der Fördergasdrücke zwischen dem zweiten Schleusbehälter und dem ersten Schleusbehälter,
Entleeren des körnigen Materials zu dem zweiten Bereich, wobei dem zweiten Schleusbehälter durch den ersten Schleusbehälter unter Druck stehendes Fördergas zugeführt wird.

10. Förderverfahren nach einem der Ansprüche 7, 8 oder 9, unter Verwendung eines dritten Schleusbehälters und eines zweiten Behälters, wobei die von dem ersten Schleusbehälter und dem ersten Behälter gebildete Anordnung und die von dem dritten Schleusbehälter und dem zweiten Behälter gebildete Anordnung derart aktiviert werden, dass sie eine kontinuierliche Förderung von dem ersten Bereich zu dem zweiten Bereich gewährleisten.

## Claims

1. A transfer device for transferring granular material between a first zone at a first pressure (BP) and a second zone at a second pressure (HP), the second pressure (HP) being higher than the first pressure (BP), said device including at least one first lock chamber (1) comprising a supply connection (14) for supplying granular material intended to be connected to the first zone, a transfer gas tank (2), a discharge connection (18) for discharging the granular material intended to be connected to the second zone, a pneumatic connection to the pressurised transfer gas tank through an interconnection circuit (26) comprising compression means (38) for compressing transfer gas, and control means, said control means being such that:
- when the supply connection (14) is open, the discharge connection (18) is closed, and the first lock chamber (1) is in pneumatic communication with the transfer gas tank, the transfer gas being compressed by the compression means (38) for compressing the transfer gas before being sent into the tank,
- when filling the first lock chamber (1) with granular material is ended, a pneumatic connection between the first lock chamber (1) and the tank (2) is established in order to balance pressure of the transfer gas from the first lock chamber (1) and that of the tank (2)
- when the discharge connection (18) is open, the supply connection (14) is closed, and the granular material is discharged to the second zone, the first lock chamber (1) is supplied with transfer gas by the transfer gas tank (2), said transfer gas being compressed such that the first lock chamber (1) is supplied with transfer gas at a pressure close to or equal to the second pressure (HP).

2. The transfer device according to claim 1, wherein the tank is formed by the second zone, the transfer gas being that of the second zone.

3. The transfer device according to claim 1, wherein the transfer gas is different from that of the second zone, the tank being distinct from the second zone.

4. The transfer device according to claim 3, wherein the tank is formed by a second lock chamber, comprising a supply connection (22) and a discharge connection (24), said second lock chamber being able to be filled with granular material, the first lock chamber (1) thereby forming the gas tank.

5. A transfer system including two transfer devices according to one of claims 1 to 4, said devices being actuated so as to ensure substantially continuous supply of the second zone.

6. A facility for using granular material including at least one granular material stock at the first pressure, at least one transfer device according to one of claims 1 to 4 or a transfer system according to claim 5, said stock being connected to the supply connection, and at least one reactor forming the second zone.

7. A transfer method for transferring a granular material between a first zone at a first pressure and a second zone at a second pressure, the second pressure being higher than the first pressure, by means of an lock chamber able to receive the granular material and a tank able to store a pressurised transfer gas, said method including the steps of:
- supplying the first lock chamber with granular material and transferring to the tank the transfer gas contained in the first lock chamber, said transfer gas being compressed,
- balancing transfer gas pressures between the first lock chamber and the tank,
- discharging the granular material to the second zone, the first lock chamber being supplied with pressurised transfer gas by the first tank.

8. The transfer method according to claim 7, wherein the tank is the second zone, after discharging the granular material, the pressure of the transfer gas in the first lock chamber is brought back to the first pressure.

9. The transfer method according to claim 7, wherein the tank is formed by a second lock chamber, after discharging the granular material, the pressure of the transfer gas in the first lock chamber is at the first pressure and the pressure of the transfer gas in the second lock chamber is at the first pressure, said method thereby including the steps of
- supplying the second lock chamber with granular material and transferring to the first lock chamber the transfer gas contained in the first lock chamber, said transfer gas being compressed,
- balancing the transfer gas pressures between the second lock chamber and the first lock chamber,
- discharging the granular material to the second zone, the second lock chamber being supplied with pressurised transfer gas by the first lock chamber.

10. The transfer method according to one of claims 7, 8 or 9, implementing a third lock chamber and a second tank, the assembly formed by the first lock chamber and the first tank and the assembly formed by the third lock chamber and the second tank being activated so as to ensure continuous transfer from the first zone to the second zone.
